# EUROPÄISCHE PATENTANMELDUNG

(11) **EP 1 130 741 A2**
(43) Veröffentlichungstag der Anmeldung: **05.09.2001**
(21) Anmeldenummer: 01102363.7
(22) Anmeldetag: 02.02.2001
(51) Int. Cl.: H02K 5/128, F04D 13/06, F04D 29/04

(54) **Pumpe mit saugseitigem Antriebsrotor**

(30) Priorität: 29.02.2000 DE 10009376
(71) Anmelder: WILO GmbH, D-44263 Dortmund (DE)
(72) Erfinder: Stephan, Waldemar, 44319 Dortmund (DE)
(74) Vertreter: COHAUSZ HANNIG DAWIDOWICZ & PARTNER

(57) **Zusammenfassung**

Von einem Elektromotor betriebene Naßläuferpumpe, insbesondere Kreiselpumpe, mit einem Spaltrohr, das zwischen einem im Pumpenmedium rotierenden Hydraulikeinsatz und einem Stator angeordnet ist, wobei der Hydraulikeinsatz das Laufrad und eine den Saugmund des Laufrades verlängernde und den Rotor tragende Hohlwelle aufweist und wobei der Rotor in Ströungsrichtung vor dem Laufrad angeordnet ist, aufweisend außerdem ein Pumpengehäuse 3 mit einer Öffnung 17, in die der Hydraulikeinsatz in axialer Richtung einsteckbar ist, wobei im Pumpengehäuse 3 ein erstes den Hydraulikeinsatz aufnehmendes Lager 9 angeordnet ist, wobei die Öffnung 17 mit einem Gehäusedeckel 13 verschließbar ist und wobei der Gehäusedeckel 13 ein zweites den Hydraulikeinsatz aufnehmendes Lager 11 aufweist.

## Beschreibung

Die vorliegende Erfindung betrifft eine von einem Elektromotor betriebene Naßläuferpumpe, insbesondere Kreiselpumpe, aufweisend ein Spaltrohr, das zwischen einem im Pumpenmedium rotierenden Hydraulikeinsatz und einem Stator angeordnet ist, wobei der in Lagern gelagerte Hydraulikeinsatz das Laufrad und eine den Saugmund des Laufrades verlängernde, den Rotor tragende Hohlwelle umfaßt und wobei der Rotor in Strömungsrichtung vor dem Laufrad angeordnet ist.

Spaltrohrmotorpumpen sind in verschiedenen Ausführungsformen und mit unterschiedlichen Nennleistungen hinlänglich bekannt. Alle bekannten Pumpen weisen prinzipiell dieselbe Bauart auf, bei der die hydraulische Seite und die Antriebsseite baulich getrennt hintereinander angeordnet und durch einen Spalttopf hydraulisch getrennt sind. Ein grundsätzlicher Nachteil dieser Pumpen ist, daß es wegen der durch den Spalttopf bedingten Verluste im Wirkungsgrad des elektrischen Antriebes notwendig ist, entsprechend stärkere Antriebe vorzusehen, um diesen Nachteil gegenüber Trockenläufern zu kompensieren. Dieses Problem trägt dazu bei, daß derartige Spaltrohrmotorpumpen im Vergleich zu Nassläuferpumpen bei gleicher Nennleistung einen größeren Bauraum benötigen. Insbesondere weisen Nassläuferpumpen Pumpen eine vergleichsweise große axiale Länge auf.

Zwar sind auch Pumpen mit "saugseitigem" Rotor bekannt, bei denen das Laufrad in Strömungsrichtung hinter dem Rotor angeordnet ist. Die bekannten Pumpen sind jedoch von aufwendiger Konstruktion und entsprechen im benötigten Bauraum den "herkömmlichen" Pumpen.

Das Erfordernis des großen Einbauraumes trägt dazu bei, daß Spaltrohrmotorpumpen für bestimmte Anwendungsgebiete, bei denen wenig Bauraum zur Verfügung steht, trotz ihrer mitunter erheblichen Vorteile kaum eingesetzt werden können. So sind die großen Abmessungen dieser Pumpe insbesondere beim Einsatz der Pumpen im Automobilbereich von erheblichem Nachteil. Zudem sind die Pumpen aufgrund ihrer Größe verhältnismäßig komplex aufgebaut und daher vergleichsweise kostenintensiv in ihrer Herstellung.

Aufgabe der vorliegenden Erfindung ist es daher, eine solche elektrisch betriebene Nassläuferpumpe zu schaffen, die sich bei kleinen Abmessungen und besonders einfachem Aufbau durch hohe eine Zuverlässigkeit und vor allem durch geringe Herstellungskosten auszeichnet.

Diese Aufgabe wird durch eine Pumpe nach Anspruch 1 gelöst.

Der besonders vorteilhaften geringen Abmessungen der Pumpe resultieren zunächst daraus, daß der Rotor "saugseitig" vor und nicht in Bezug auf den Saugstutzen hinter dem Laufrad angeordnet ist. Der saugseitige Rotor ermöglicht eine besonders kompakte Bauform der Pumpe, bei der das Pumpengehäuse erfindungsgemäß mit einer zentralen Öffnung versehen ist. In diese Öffnung ist der Hydraulikeinsatz in axialer Richtung einsteckbar. Dabei ist im Pumpengehäuse ein erstes den Hydraulikeinsatz aufnehmendes Lager angeordnet. Die Öffnung ist mit einem Gehäusedeckel verschließbar, wobei der Gehäusedeckel ein zweites den Hydraulikeinsatz aufnehmendes Lager aufweist. Auf diese Weise entfällt der bei bekannten Pumpen benötigte elektrische Antriebsteil nahezu vollständig, der in einem hinter dem Laufrad befindlichen, meist zylindrischen, Gehäuse angeordnet ist. Der elektrische Antrieb erfolgt nunmehr vermittels eines Rotors, der vorne auf dem Laufrad angeordnet ist.

Die besondere Raumersparnis ergibt sich bei der erfindungsgemäßen Pumpe letztendlich daraus, daß auf die sonst üblichen Komponenten zur Lagerung der Welle und zur Aufhängung des Spalttopfes, die in Bezug auf das Laufrad sonst hinter dem Lagerschild angeordnet sind, verzichtet werden kann. Die Pumpe endet somit unmittelbar hinter dem Laufrad.

Vorteilhafterweise wird die Erfindung bei Kreiselpumpen eingesetzt, wobei das Laufrad so konzipiert ist, daß es eine zylindrische Hohlwelle aufweist, die koaxial den zentral angeordneten Saugmund umgibt und die dabei von ausreichender Länge ist, um die für den Rotor benötigten Permanentmagneten zu tragen. Diese Konstruktion begünstigt in besonderer Weise die erfindungsgemäße Anordnung des Rotors zwischen dem Saugstutzen und dem Laufrad. Im Prinzip wird bei dem so konzipierten Laufrad der vom Pumpmedium durchflossene Saugmund als Hohlwelle ausgebildet, die den Rotor trägt. Bezüglich der hydraulischen Eigenschaften ist es dabei besonders vorteilhaft, wenn die Hohlwelle und der Saugstutzen den gleichen Innendurchmesser aufweisen. Damit kann das Pumpmedium ungestört über den in gewisser Weise verlängerten Saugstutzen in das Laufrad eintreten und wird von da zum Druckstutzen befördert.

Der besondere Vorteil der erfindungsgemäßen Pumpe liegt wie bereits erwähnt in der kompakten Bauweise mit einer relativ geringen Baulänge. Eine solche Pumpe ist zudem wegen des einfachen Aufbaus besonders kostengünstig in ihrer Herstellung. Mit diesen Qualitäten eignet sich die Pumpe insbesondere für den Einsatz in Kühlkreisläufen von Kraftfahrzeugen. Der erfindungsgemäße Aufbau der Pumpe trägt dabei zu einer besonders hohen Wartungsfreundlichkeit und Zuverlässigkeit der Pumpe bei. Weiterhin bewirkt die Tatsache, daß das Pumpmedium in Rotation versetzt wird bevor es das Laufrad erreicht, eine Erhöhung des Wirkungsgrades der Pumpe. Dabei kann die Pumpe aus lediglich drei Komponenten zusammengesetzt, wobei die eine als Aufnahme ausgebildete Komponente das die Laufradkammer umgebende Gehäuse der Pumpe mit den daran angeformten Stutzen ist. Der Stator kann in diese erste Komponente eingearbeitet, beispielsweise eingespritzt, sein. Diese erste Komponente bildet als Aufnahme eine Lagerung für die zweite Komponente, das Laufrad mit daran ängeformtem Rotor. Die Aufnahme wird rückseitig von der dritten Komponente, einer Abdeckung, verschlossen, welche eine zweite Lagerung für das Laufrad ausbildet.

Somit sind in einer besonders vorteilhaften Ausführungsform der Pumpe das Laufrad mit der den Saugmund umgebenden Hohlwelle einstückig, insbesondere aus Kunststoff, gefertigt und bilden damit einen kompakten Hydraulikeinsatz, also die zweite Komponente. Der Hydraulikeinsatz ist vorteilhafter Weise so ausgelegt, daß er die Hohlwelle umgebende Permanentmagneten aufnehmen kann. Z. B. können die Permanentmagneten in das Material des Hydraulikeinsatzes eingebettet, insbesondere eingegossen, werden.

Weiterhin ist es vorteilhaft, den Hydraulikeinsatz an der Rückseite des Laufrades mit einem Lagerzapfen zu versehen, so daß der Hydraulikeinsatz zwischen zwei Gleitlagern angeordnet werden kann. Ein solcher Hydraulikeinsatz enthält somit sämtliche für die Funktion der Pumpe benötigten Komponenten und trägt damit zu einer weiteren Vereinfachung des Pumpenaufbaus bei. Solche Hydraulikeinsätze können auch mit verschiedenen Laufradgeometrien vorgesehen werden, so daß die Pumpe je nach dem für sie vorgesehenen Einsatzzweck mit einem Hydraulikeinsatz ausgestattet werden kann.

Ein weiterer Vorteil der erfindungsgemäßen Pumpe ist, daß keinerlei Todräume vorhanden sind, in denen Pumpmedium mit geringer Austauschrate verbleibt, wie es vormals in den schlecht durchspülten Spalttöpfen der Fall war. Somit können sich bei der Pumpe keine Ablagerungen von Inhaltsstoffen, die im Pumpmedium vorhanden sind, bilden, was zu einer weiteren Erhöhung der Zuverlässigkeit und der Lebensdauer der erfindungsgemäßen Pumpe beiträgt.

In einer besonders zu bevorzugenden Ausführungsform weist die Pumpe ein einstückiges, im wesentlichen rotationssymmetrisches Pumpengehäuse auf, bei dem der Saugstutzen das Spaltrohr und die Laufradkammer in axialer Ausrichtung hintereinander angeordnet sind. Dieses Pumpengehäuse kann vorteilhafterweise einstückig aus Kunststoff gefertigt werden, was zu einer weiteren Reduzierung der Herstellungskosten und des Gewichtes der Pumpe beiträgt. An dem Laufradgehäuse ist, wie hinlänglich bekannt, ein radial abstehender Druckstutzen angebracht. Dieses in seiner Konstruktion sehr vereinfachte Pumpengehäuse gewährleistet insbesondere mit dem erfindungsgemäßen Hydraulikeinsatz eine konstruktiv besonders einfache Pumpe. So dient das nach hinten offene Pumpengehäuse (als erste Komponente) als Aufnahme für den Hydraulikeinsatz, der lediglich in das offene Gehäuse eingesetzt werden braucht, wobei am Boden des Gehäuses ein die Mündung des Saugstutzens umgebender Gleitring angeordnet ist. Die Statorwindungen können in den Kunststoff eingegossen sein.

Nach dem Einsetzen des Hydraulikeinsatzes wird die Öffnung des Pumpengehäuses mit einem Gehäusedeckel verschlossen, der vorteilhafterweise lösbar, beispielsweise über eine Schraub- oder Rastverbindung mit dem Pumpengehäuse verbunden ist. Dieser Gehäusedeckel weist in einer besonders einfachen Ausführungsform eine zylindrische Aufnahme auf, in die der an der Rückseite des Laufrades angeordnete Lagerstutzen vermittels eines Gleitlagers eingesetzt wird. Über den erfindungsgemäßen Gehäusedeckel ist das Innenleben der Pumpe jederzeit zugänglich, so daß defekte Komponenten auf einfache Weise austauschbar sind.

Unter Berücksichtigung eines den Spalttopf umgebenden Stators besteht die erfindungsgemäße Pumpe lediglich aus drei, höchstens vier Bauteilen, wobei der rotierende Hydraulikeinsatz über zwei Gleitlager zwischen dem Pumpengehäuse und dem Gehäusedeckel gehalten ist. Die so aufgebaute Pumpe zeichnet sich durch ihre besondere Kompaktheit aus und ist wegen der geringen Zahl an Bauteilen besonders robust und zuverlässig.

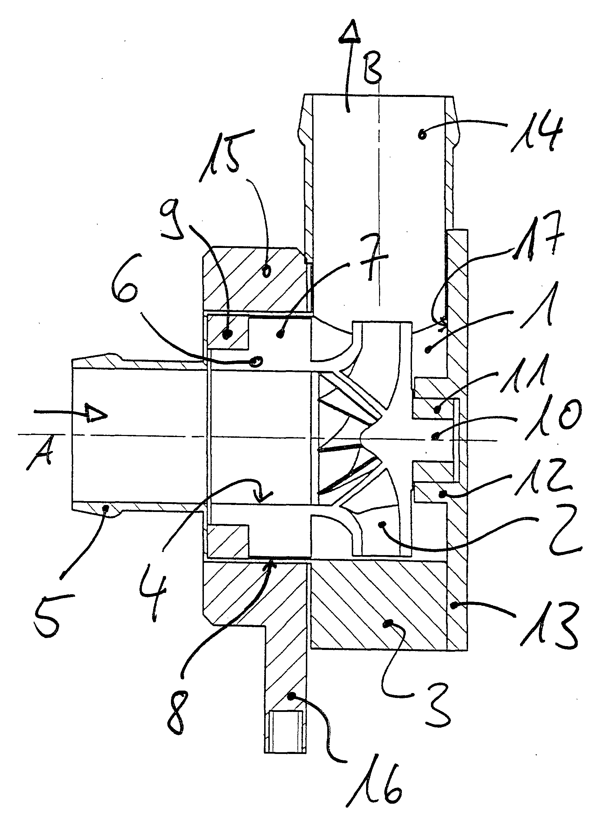

Eine besondere Ausführungsform der erfindungsgemäßen Pumpe wird im folgenden anhand der Figur näher beschrieben.

Die Figur zeigt eine von einem Elektromotor betriebene Spaltrohrmotorpurnpe mit einem in einer Laufradkammer 1 angeordneten Laufrad 2. Die Laufradkammer 1 ist von einem Pumpengehäuse 3 umgeben, an das ein koaxial zum Saugmund 4 des Laufrades 2 ausgerichteter Saugstutzen 5 angeformt ist. Das Pumpmedium wird dem Saugstutzen in Pfeilrichtung A zugeführt. Den Saugmund 4 des Pumpenrades 2 umgibt eine zylindrische Hohlwelle 6, auf der ein Rotor 7 mit nicht dargestellten Permanentmagneten gehalten ist. Dabei sind die Magneten in das Material des Rotors eingegossen. Laufrad 2, Hohlwelle 6 und Rotor 7 bilden einen einstückigen Hydraulikeinsatz. Auf der dem Saugstutzen 5 abgewandten Rückseite des Pumpengehäuses 3 weist dieses eine Öffnung 17 auf, in die der Hydraulikeinsatz in axialer Richtung (entgegen Pfeil A) einsteckbar ist . Das Pumpengehäuse bildet ein erstes den Hydraulikeinsatz aufnehmendes Lager.

Wie die Figur deutlich zeigt, ist der Rotor, der von der mit Permanentmagneten umgebenden Hohlwelle 6 gebildet ist, in Strömungsrichtung (Pfeil A) vor dem Laufrad 2 und hinter dem Saugstutzen 5 angeordnet. Dabei läuft der Rotor in einem Spaltrohr 8, das von einer Wand des einstückigen Gehäuses 3 gebildet wird. Der Innendurchmesser des Saugstutzens 5 entspricht dabei dem Innendurchmesser der Hohlwelle 6 und damit dem des Saugmundes 4.

Das Laufrad 2 und der auf der Hohlwelle 6 sitzende Rotor 7 sind einstückig zu einem Hydraulikeinsatz geformt, der im Innenraum des Pumpengehäuses 3 in ein erstes Gleitlager 9 eingesteckt ist. Der Hydraulikeinsatz weist auf der Rückseite des Laufrades 2 einen Lagerzapfen 10 auf, der vermittels eines Gleitringes 11 in ein als Aufnahme konzipiertes zweites Lager eingesetzt ist. Das zweite Lager ist an einen die Öffnung 17 verschließenden Gehäusedeckel 13 angeformt. Der Gehäusedeckel 13 ist dabei über eine nicht dargestellte Dichtung gegenüber dem Gehäuse 3 abgedichtet. Das vom Laufrad 2 gepumpte Pumpmedium verläßt das Gehäuse 3 über einen senkrecht zum Saugstutzen 5 ausgerichteten Druckstutzen 14 (Pfeil B).

Der im Spaltrohr 8 drehbar gelagerte Rotor 7 ist von einem auf das Spaltrohr 8 aufgesetzten Stator 15 umgeben, der in diesem Fall als Ring auf das Gehäuse aufgesetzt ist. Die nicht dargestellten Statorwicklungen werden über einen Stecker 16 mit der Versorgungsspannung kontaktiert. In der beschriebenen Ausführungsform kann die Pumpe so kompakt gebaut werden, daß die axiale Ausdehnung des Laufrades etwa der axialen Ausdehnung des Rotors entspricht.

## Patentansprüche

1. Von einem Elektromotor betriebene Naßläuferpumpe, insbesondere Kreiselpumpe, aufweisend ein Spaltrohr, das zwischen einem im Pumpenmedium rotierenden Hydraulikeinsatz und einem Stator angeordnet ist, wobei der in Lagern gelagerte Hydraulikeinsatz das Laufrad und eine den Saugmund des Laufrades verlängernde, den Rotor tragende Hohlwelle umfaßt und wobei der Rotor in Strömungsrichtung vor dem Laufrad angeordnet ist,
**gekennzeichnet durch** ein Pumpengehäuse (3) mit einer Öffnung (17), in die der Hydraulikeinsatz in axialer Richtung einsteckbar ist, wobei im Pumpengehäuse (3) ein erstes den Hydraulikeinsatz aufnehmendes Lager (9) angeordnet ist, wobei die Öffnung (17) mit einem Gehäusedeckel (13) verschließbar ist und wobei der Gehäusedeckel (13) ein zweites den Hydraulikeinsatz aufnehmendes Lager (11) aufweist.

2. Pumpe nach Anspruch 1,
**dadurch gekennzeichnet,** daß an das Pumpengehäuse (3) der koaxial zum Hydraulikeinsatz angeordnete Saugstutzen (5) und ein radial angeordneter Druckstutzen (14) einstückig angeformt sind.

3. Pumpe nach Anspruch 1 oder 2,
**dadurch gekennzeichnet,** daß das Spaltrohr (8)von einer den Hydraulikeinsatz umgebenden Wand des Pumpengehäuses (3) gebildet ist.

4. Pumpe nach Anspruch 3,
**dadurch gekennzeichnet**, daß der Stator (15) mit seinen Wicklungen in die Wand eingegossen ist.

5. Pumpe nach einem der vorherigen Ansprüche ,
**dadurch gekennzeichnet,** daß der Elektromotor ein elektronisch kommutierter Motor ist.

6. Pumpe nach einem der vorherigen Ansprüche,
**dadurch gekennzeichnet**, daß der Saugstutzen (5) koaxial zur Hohlwelle (6) angeordnet ist, wobei der Innendurchmesser des Saugstutzens (5) dem Innendurchmesser der Hohlwelle (6) entspricht.

7. Pumpe nach einem der vorherigen Ansprüche ,
**dadurch gekennzeichnet**, daß das Pumpengehäuse (3), der einstückige Hydraulikeinsatz und der Gehäusedeckel (13) aus Kunststoff gefertigt sind.

8. Pumpe nach einem der vorherigen Ansprüche ,
**dadurch gekennzeichnet**, daß das einstückige Pumpengehäuse (3) im wesentlichen rotationssymmetrisch ist und den zentralen Saugstutzen (5), ein an den Saugstutzen (5) anschließendes Spaltrohr (8) und eine an das Spaltrohr (8) anschließende Laufradkammer (1) aufweist, wobei an die Laufradkammer (1) ein radial ausgerichteter Druckstutzen (14) angeformt ist.

9. Pumpe nach einem der vorherigen Ansprüche ,
**dadurch gekennzeichnet**, daß der Hydraulikeinsatz vermittels eines auf der Rückseite des Laufrades (2) angebrachten Lagerzapfens (10) in das zweite Lager einsteckbar ist.
